(19) Europäisches Patentamt
European Patent Office
Office européen des brevets

(11) Publication number: **0 127 012**
**A2**

# (12) EUROPEAN PATENT APPLICATION

(21) Application number: **84105032.1**

(22) Date of filing: **04.05.84**

(51) Int. Cl.³: **A 23 L 1/30**
A 23 F 5/14, A 23 F 3/14
C 12 H 1/14, A 24 B 15/30

(30) Priority: **30.05.83 JP 95285/83**
**30.05.83 JP 95286/83**
**30.05.83 JP 95287/83**

(43) Date of publication of application:
**05.12.84 Bulletin 84/49**

(84) Designated Contracting States:
**AT BE CH DE FR GB IT LI LU NL SE**

(71) Applicant: **Suntory Limited**
**1-40 Dojimahama 2-chome Kita-ku**
**Osaka-shi Osaka-fu 530(JP)**

(72) Inventor: **Suwa, Yoshihide**
**7-16 Yamatedai 6-chome**
**Ibaraki-shi Osaka(JP)**

(72) Inventor: **Kobayashi, Takumi**
**1-10, Himuro-cho 1-chome**
**Takatsuki-shi Osaka(JP)**

(72) Inventor: **Yoshizumi, Hajime**
**6-1-612, Kosobe-cho 2-chome**
**Takatsuki-shi Osaka(JP)**

(74) Representative: **Hansen, Bernd, Dr.rer.nat. et al,**
**Hoffmann, Eitle & Partner Patentanwälte Arabellastrasse 4**
**D-8000 München 81(DE)**

## (54) Antimutagenic agent and a method of reducing mutagenicity.

(57) A component selected from a vitamin B complex consisting of thiamine pyrophosphate, folic acid and nicotinic acid, lipoic acid and thiol compounds forms (L-cysteine and reduced glutathione) of the formula RSH wherein R is

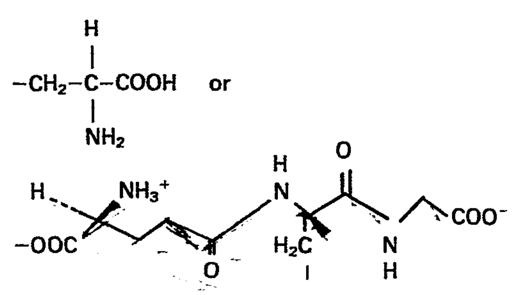
or

are active as antimutagenic agents. These compounds reduce or completely inactivate the mutagenicity of beverages (both alcoholic and nonalcoholic) and tobacco which is enhanced by synthetic vitamin C. The increase in the mutagenicity of beverages and tobacco in combination with synthetic vitamin C can be prevented by incorporating these compounds in the synthetic vitamin C preparation. Thiamine pyrophosphate, folic acid and nicotinic acid are the components of a vitamin B complex. Lipoic acid is a coenzyme essential for the metabolism of the living body. L-cysteine is a vitamin C stabilizer and reduced glutathione antidote/liver protecting agent. Therefore, these three groups of compounds can be used in methods of reducing or eliminating mutagenicity as they can be incorporated in foodstuffs, beverages and tobacco without causing any toxicity in humans.

EP 0 127 012 A2

Antimutagenic agent and a method of reducing mutagenicity

The present invention relates to an antimutagenic agent containing as the effective ingredient a compound selected from among a component of a vitamin B complex consisting of thiamine pyrophosphate, folic acid and nicotinic acid, lipoic acid and L-cysteine/reduced glutathione. The invention also relates to a composition comprising such antimutagenic agent and synthetic vitamin C, as well as a method of reducing or inactivating the mutagenicity enhanced by the presence of synthetic vitamin C.

Basically, the present invention relates to an antimutagenic agent for reducing or completely inactivating the mutagenicity of beverages (both alcoholic and nonalcoholic) and tobacco which is enhanced by synthetic vitamin C (also known as L-ascorbic acid).

Vitamin C has long been used as a sovereign remedy against scurvy. It is also known to be efficacious against viral or bacteriogenous infections diseases such as common cold, influenze, virus pneumonia, hepatitic poliomyelitis, measles, mumps, chickenpox and tuberculosis.

Recently, vitamin C has been found to have the ability to check the growth of malignant tumors (H. Kawasaki et al., Cancer Letters, Vol. 16, 57-63, 1982) or retard the formation of a nitroso compound (S. S. Mirvish et al., Science, Vol. 177, 65-68, 1972). Therefore, vitamin C is considered to be an important substance for cancer prevention. Furthermore, the effectiveness of a large intake of vitamin C is being claimed by several authorities, among whom a Nobel laureate Dr. Linus Pauling is the most prestigious protagonism (E. Cameron et al., Cancer Research, Vol. 39, 663-681, 1979). Today, a high intake of vitamin C in the form of pills or tablets is an everyday matter for an increasing number of people.

However, vitamin C has a strong reducing nature due to an endiol group in the molecule, and in addition to its

useful physiological activities, vitamin C may cause deleterious reactions depending on the type of substances with which it is ingested into the body. As a matter of fact, in the presence of cupreous ions, vitamin C exhibits mutagenicity (H. F. Stich et al., Nature, Vol. 260, 722-724, 1976), causes chromosome aberration in animal cells (H. F. Stich et al., Ef. Cosmet. Toxicol., Vol. 18, 497-501, 1980), enhances the potency of a carcinogen methylcholanthrene (S. Banit, Cancer Letters, Vol. 11, 239-242, 1981) or works as a cancer-inducing promoter (K. Imaida et al., Proc. Jap. Cancer Association, 41th Ann. Meeting, p. 79, 1982).

It is already known that when vitamin C is dissolved in coffee, the mutagenicity of the resulting solution is at least 6 times as high as that of the coffee alone (Y. Suwa et al., Mutation Res., Vol. 102, 383-391, 1982). According to the studies of the present inventors, the mutagenicity of other beverages such as black tea and bourbon whiskey, as well as tobacco, when ingested together with vitamin C, is increased to a level that is several times as high as that of these beverages or tobacco per se. Since a large intake of vitamin C by an individual is not unuaual these days, the development of a method for utilizing only the meritorious effects of vitamin C without endangering the human body will be an urgent matter for the purpose of cancer prevention.

Since the dawn of its history, man has taken in vitamin C together with other nutrients that occur in nature, and it is quite exceptional in the evolution of animals that vitamin C alone is ingested in high dose. It is unthinkable that the occurrence of increased mutagenicity due to vitamin C will cause no toxicity in human cells, and when vitamin C is ingested in the form of vegetables and fruits, its deleterious effects are in most likelifood inhibited by some other components of vegetables or fruits. Based on this assumption, the present inventors made various studies to find substances that are capable of reducing or completely eliminating the increase mutagenicity due to vitamin C. As a result, the inventors have found that the

three components of a vitamin B complex, i.e. 1) thiamine pyrophosphate (TPP) which is a diphosphate ester of thiamine (vitamin $B_1$) and is essential to the oxidation and decarboxylation of α-keto acid, 2) folic acid and 3) nicotinic acid, lipoic acid capable of activating thiamine pyrophosphate (TPP), and thiol compounds (e.g. L-cysteine and reduced glutathione) have the ability to act against the mutagenicity increased by vitamin C. Lipoic acid has heretofore been used as a therapeutic agent against hepatocirrhosis and hepatic coma. L-cysteine and reduced glutathione have respectively been used as a vitamin C stabilizer and an antidote/liver protecting agent. Therefore, nobody has ever anticipated the antimutagenicity of these compounds and it is an entirely novel finding that these compounds have such antimutagenicity as well as their own physiological effects. Consequently, mixing one or more of these compounds with vitamin C and making a preparation that is able to prevent the occurrence of mutagenicity owing to the reaction between vitamin C and beverages or tabacco or cupreous ions without sacrificing the desired activities of vitamin C is entirely a new use of these compounds.

According to the experiments conducted by the present inventors, vitamin C increases the mutagenicity of coffee by about 6 to 10 folds. However, this increase can be suppressed almost completely by mixing 1 mol of vitamin C with 4 mols of thiamine pyrophosphate or lipoic acid, or 1 mol of L-cysteine or reduced glutathione. The same result can be obtained by mixing 1 mol of vitamin C with an equimolar amount of each of thiamine pyrophosphate, folic acid and nicotinic acid. Similarly, the increase in the mutagenicity of black tea, tobacco or straight bourbon whiskey due to vitamin C can be inhibited by mixing vitamin C with one or more of the three components of a vitamin B complex, or with lipoic acid or one of the thiol compounds.

Thiamine also has the antimutagenic activity although its level is much lower than that of thiamine pyrophosphate. In the living body, thiamine reacts with ATP (adenosine triphosphate) to form the activated thiamine pyrophosphate.

For clinical purposes, thiamine pyrophosphate in the activated form is preferred because it prevents the attack of the tissues of the digestive tract by a mutagen more effectively than thiamine.

The advantages of the present invention will become apparent by reading the following examples to which the invention is by no means limited.

Example I

Efficacy of Vitamin B Complex

1) Measuring the mutagenicity and antimutagenic activity

(i) Method: The preincubation method shown in Sugimura & Nagao; Chemical Mutagens, Vol. 6, 41, 1981 was used.

(ii) Microorganism: Histidine requiring *Salmonella typhimurium* TA 100 (hereunder "S.TA 100 strain") was used.

(iii) Preparation of samples

a) Instant coffee: Instant coffee powder was dissolved in distilled water. Predetermined amounts of thiamine pyrophosphate, folic acid and nicotinic acid (hereunder referred to as compounds of group A) were respectively dissolved in distilled water together with a given amount of vitamin C. Each solution was mixed with the aqueous coffee solution to make 100 µl.

Control solution were prepared using thiamine and vitamin E in combination with the instant coffee solution.

b) Tobacco: Cigarettes were smoked on a smoking machine (product of Chuo Sansho K.K.) and the collected smoke (particulate phase) was dissolved in dimethyl sulfoxide (hereunder DMSO). Predetermined amounts of compounds of group A were dissolved in distilled water together with a given amount of vitamin C. Each solution was mixed with the dimethyl sulfoxide solution of tobacco smoke to make 100 µl.

c) Bourbon whiskey: Bourbon whiskey was evaporated ( 40°C) to dryness under vacuum in a rotary evaporator. The resulting solid product was dissolved in DMSO. Predetermined amounts of compounds of group A were dissolved in distilled water together with a given amount of vitamin C. Each solution was mixed with the DMSO solution of the alcoholic

concentrate to make 100 1.

d) Black tea: Black tea leaves (2.5 g) were brewed with 100 ml of boiling water. The extract was freeze-dried and the resulting solid matter was dissolved in distilled water to form a solution of a predetermined concentration. Selected amounts of compounds of group A were dissolved in distilled water together with a given amount of vitamin C. Each solution was mixed with the aqueous solution of tea concentrate to make 100 μl.

(iv) Measurement of mutagenicity

To 100 1 of each of the samples prepared in (a) to (d), 500 μl of 100 mM sodium phosphate buffer (pH 7.4) and 100 μl of a culture of S.TA 100 were added. Each of the mixtures was shaken for 20 minutes at 37°C, added to 2.5 ml of a soft agar solution and spread on a minimum glucose agar plate which had been supplemented with 50 μM per plate for causing several dinishions. After incubation at 37°C for 48 hours, the number of colonies on the plate was counted as revertants. In this experiment, S9 mix (a mixture of 9,000 g supernatant of a rat liver homogenate and a reduced nicotinic acid amide adenine nucleoside (NADPH) producing system) was not added.

2) Results

(i) Inactivation of the mutagenicity caused by mixing vitamin C with coffee

a) Antimutagenicity of thiamine pyrophosphate and thiamine

The mutagenicity against S.TA 100 caused by mixing vitamin C with coffee was determined for each test sample by subtracting the mutagenicity of coffee per se from the measured value. The results are shown in Table 1.

Table 1

| instant coffee (mg/plate) | No. of revertants/plate | | |
|---|---|---|---|
| | vitamin C* | vitamin C + TPP** | vitamin C + thiamine*** |
| 1.5 | 267 | 17 | 198 |
| 3 | 462 | 50 | 351 |
| 6 | 590 | 106 | 403 |
| 9 | 451 | 66 | 409 |

* 0.375, 0.75, 1.5, 2.25 μM/plate

** 1.5, 3.0, 6.0, 9 μM/plate

*** 1.5, 3.0, 6.0, 9 μM/plate

Table 1 shows that by mixing 4 mols of thiamine pyrophosphate (TPP) with one mol of vitamin C, the increase in mutagenicity due to vitamin C can be substantially prevented. Thiamine also works as an antimutagenic agent but its activity is much weaker than that of TPP.

As shown in Table 1, four different amounts of coffee were used in the actual experiment, but in Table 2 onward, the amount of coffee, black tea or bourbon whiskey tested is fixed in order to show the effectiveness of each additive clearly.

b) Antimutagenicity of compounds of group A

Table 2 shows that the mutagenicity of the combination of vitamin C and coffee is about 10 times as great as that of coffee alone. Table 2 also shows the antimutagenicity of the compounds of group A, as well as thiamine and vitamin E. The figures in parentheses indicate the relative mutagenicity of samples containing test compounds, with the mutagenicity of the mixture of coffee and vitamin C taken as 100%.

Table 2

S. *typhimurium* TA100

| Sample | No. of revertants /plate (%) |
|---|---|
| coffee* | 35 ( 9) |
| coffee + vitamin C** | 372 (100) |
| coffee + vitamin C + folic acid*** | 64 ( 17) |
| coffee + vitamin C + nicotinic acid*** | 253 ( 68) |
| coffee + vitamin C + thiamine pyrophosphate*** | 72 ( 19) |
| coffee + vitamin C + thiamine*** | 329 ( 88) |
| coffee + vitamin C + vitamin E*** | 314 ( 84) |

* 3 mg/plate

** 3 μM/plate

*** 12 μM/plate

Neither vitamin C nor compounds of group A had mutagenicity when they were present alone.

According to Table 2, folic acid and thiamine pyrophosphate (TPP) have the greatest antimutagenicity, whereas the effectiveness of nicotinic acid, thiamine and vitamin E is very low or negligible. The activity of the compounds of group A is not directed to the mutagenicity of coffee per se (nor to the mutagenicity of straight bourbon whiskey, black tea or tobacco alone as shown below), but is specific to the mutagenicity that appears when coffee (also bourbon whiskey, black tea or tobacco) is combined with vitamin C. Furthermore, the inactivating action of the compounds of group A came into play after the increase in mutagenicity was confirmed following the addition of vitamin C to coffee. This seems to suggest that the compounds of group A do not act on the process of formation of a mutagen, but on the mutagen or radical (active oxygen) per se that is generated by the reaction between coffee and vitamin C.

(ii) Inactivation of mutagenicity due to mixing vitamin C with straight bourbon whiskey

As shown in Table 3 below, the mutagenicity of straight bourbon whiskey was increased by at least 5 folds upon addition of vitamin C. Folic acid proved most effective in preventing this increase in mutagenicity. Nicotinic acid and TPP were also effective and their antimutagenicity was only next to folic acid. The activity of thiamine was weak and vitamin E had no antimutagenic activity.

Table 3

S. *typhimurium* TA100

| Sample | No. of revertants /plate | (%) |
|---|---|---|
| bourbon whiskey* | 108 | ( 18) |
| bourbon whiskey + vitamin C** | 596 | (100) |
| bourbon whiskey + vitamin C + folic acid*** | 165 | ( 28) |
| bourbon whiskey + vitamin C + nicotinic acid*** | 223 | ( 37) |
| bourbon whiskey + vitamin C + thiamine pyrophosphate*** | 292 | ( 49) |
| bourbon whiskey + vitamin C + thiamine*** | 504 | ( 85) |
| bourbon whiskey + vitamin C + vitamin E*** | 660 | (110) |

* 0.5 ml/plate

** 3 μM equivalent plate

*** 12 μM/plate

(iii) Inactivation of mutagenicity due to mixing vitamin C with cigarette smoke condensate (CSC)

The particulate phase of tobacco smoke was collected on a glass fiber filter and dissolved in DMSO to form CSC samples. The mutagenicity due to the reaction between vitamin C and CSC could be eliminated by folic acid, thiamine pyrophosphate and nicotinic acid. Thiamine and vitamin E were not effective at all. These results are shown in Table 4.

Table 4

*S. typhimurium* TA100

| Sample | No. of revertants /plate (%) |
|---|---|
| tobacco* | 14 ( 16) |
| tobacco + vitamin C** | 87 (100) |
| tobacco + vitamin C + folic acid*** | 18 ( 21) |
| tobacco + vitamin C + nicotinic acid*** | 25 ( 29) |
| tobacco + vitamin C + thiamine pyrophosphate*** | 24 ( 28) |
| tobacco + vitamin C + thiamine*** | 80 ( 92) |
| tobacco + vitamin C + vitamin E*** | 90 (103) |

* 0.25 mg/plate

** 3 μM/plate

*** 12 μM/plate

(iv) Inactivation of mutagenicity due to mixing vitamin C with black tea

The mutagenicity of black tea was also increased by addition of vitamin C (see Table 5 below). This effect of vitamin C was completely inactivated by folic acid and thiamine pyrophosphate. Nicotinic acid also had an appreciable level of antimutagenicity. But neither thiamine nor vitamin E had such effectiveness.

Table 5

S. typhimurium TA100

| Sample | No. of revertants /plate | (%) |
|---|---|---|
| black tea* | 21 | ( 15) |
| black tea + vitamin C** | 139 | (100) |
| black tea + vitamin C + folic acid*** | 0 | ( 0) |
| black tea + vitamin C + nicotinic acid*** | 35 | ( 25) |
| black tea + vitamin C + thiamine poryphosphate*** | 0 | ( 0) |
| black tea + vitamin C + thiamine*** | 120 | ( 86) |
| black tea + vitamin C + vitamin E*** | 145 | (104) |

* 0.5 ml equivalent/plate

** 3 μM/plate

*** 12 μM/plate

Example II

Efficacy of Lipoic Acid

1) Measuring the mutagenicity and antimutagenic activity

(i) Method: See Example I.

(ii) Microorganism: See Example I.

(iii) Preparation of samples

a) Instant coffee: Instant coffee powder was dissolved in distilled water. Predetermined amounts of vitamin C and lipoic acid were dissolved in distilled water. The two solutions were mixed to make 100 μl. Control solutions were prepared using thiamine and vitamin E in combination with the instant coffee solution.

b) Tobacco: Cigarettes were smoked on a smoking machine (product of Chuo Sansho K.K.) and the collected smoke (particulate phase) was dissolved in DMSO. Predetermined amounts of vitamin C and lipoic acid were dissolved in distilled water. The two solutions were mixed to make 100 μl.

c) Bourbon whiskey: Bourbon whiskey was evaporated ( $\leq$ 40°C) to dryness under vacuum in a rotary evaporator. The resulting solid product was dissolved in DMSO. Predetermined amounts of vitamin C and lipoic acid were dissolved in

distilled water. The two solutions were mixed to make 100 µl.

d) Black tea: Black tea leaves (2.5 g) were brewed with 100 ml of boiling water. The extract was freeze-dried and the resulting solid matter was dissolved in distilled water to form a solution of a predetermined concentration. Selected amounts of vitamin C and lipoic acid were dissolved in distilled water. The two solutions were mixed to make 100 µl.

(iv) Measurement of mutagenicity

The procedure of Example I was repeated.

2) Results

(i) Inactivation of the mutagenicity caused by mixing vitamin C with coffee

Table 6 shows that the mutagenicity of the combination of vitamin C and coffee is about 10 times as great as that of coffee alone. Table 6 also shows the antimutagenic activity of lipoic acid, thiamine and vitamin E. The figures in parentheses indicate the relative mutagenicity of samples containing test compounds, with the mutagenicity of the mixture of coffee and vitamin C taken as 100%.

Table 6

S. typhimurium TA100

| Sample | No. of revertants /plate (%) |
|---|---|
| coffee* | 35 ( 9) |
| coffee + vitamin C** | 372 (100) |
| coffee + vitamin C + lipoic acid*** | 66 ( 18) |
| coffee + vitamin C + thiamine*** | 329 ( 88) |
| coffee + vitamin C + vitamin E*** | 314 ( 84) |

* 3 mg/plate

** 3 µM/plate

*** 12 µm/plate

Neither vitamin C nor lipoic acid had mutagenicity when it was present alone.

As is apparent from Table 6, lipoic acid was effective against the mutagenicity caused by the combination of vitamin C and coffee. No such effect was observed in thiamine or vitamin E. The activity of lipoic acid is not directed to the mutagenicity of coffee per se (nor to the mutagenicity of straight bourbon whiskey, black tea or tobacco alone as shown below), but is specific to the mutagenicity that appears when coffee is combined with vitamin C. Furthermore, the inactivating action of lipoic acid came into play after the increase in mutagenicity was confirmed upon addition of vitamin C to coffee. This seems to suggest that the lipoic acid does not act on the process of mutagen formation but on the mutagen or radical (active oxygen) per se that is generated by the reaction between coffee and vitamin C.

(ii) Inactivation of mutagenicity due to mixing vitamin C with straight bourbon whiskey

As shown in Table 7 below, the mutagenicity of straight bourbon whiskey was increased by at least 5 folds upon addition of vitamin C. Lipoic acid proved effective in preventing this increase in mutagenicity. The activity of thiamine was weak and vitamin E had no antimutagenic activity.

Table 7

*S. typhimurium* TA100

| Sample | No. of revertant /plate | (%) |
|---|---|---|
| bourbon whiskey* | 108 | ( 18) |
| bourbon whiskey + vitamin C** | 596 | (100) |
| bourbon whiskey + vitamin C + lipoic acid*** | 98 | ( 16) |
| bourbon whiskey + vitamin C + thiamine*** | 504 | ( 85) |
| bourbon whiskey + vitamin C + vitamin E*** | 660 | (110) |

* 0.5 ml equivalent/plate

** 3 μM/plate

*** 12 μM/plate

(iii) Inactivation of mutagenicity due to mixing vitamin C with cigarette smoke condensate (CSC)

The particulate phase of tobacco smoke was collected on a glass fiber filter and dissolved in DMSO to form CSC samples. The mutagenicity due to the reaction between vitamin C and CSC could be eliminated by lipoic acid, but thiamine and vitamin E had no such ability at all. These results are shown in Table 8.

Table 8

*S. typhimurium* TA100

| Sample | No. of revertants /plate (%) |
|---|---|
| tobacco* | 14 ( 16) |
| tobacco + vitamin C** | 87 (100) |
| tobacco + vitamin C + lipoic*** | 13 ( 15) |
| tobacco + vitamin C + thiamin*** | 80 ( 92) |
| tobacco + vitamin C + vitamin E*** | 90 (103) |

* 0.25 mg/plate

** 3 μM/plate

*** 12 μM/plate

(iv) Inactivation of mutagenicity due to mixing vitamin C with black tea

The mutagenicity of black tea was also increased by addition of vitamin C (see Table 9 below). This effect of vitamin C was completely inactivated by lipoic acid. Neither thiamine nor vitamin E had such effectiveness.

Table 9

S. typhimurium TA100

| Sample | No. of revertants /plate (%) |
|---|---|
| black tea* | 21 ( 15) |
| black tea + vitamin C** | 139 (100) |
| black tea + vitamin C + lipoic acid*** | 0 ( 0) |
| black tea + vitamin C + thiamine*** | 120 ( 86) |
| black tea + vitamin C + vitamin E*** | 145 (104) |

* 0.25 ml equivalent/plate

** 3 μM/plate

*** 12 μM/plate

Example III

Efficacy of Thiol Compounds

1) Measuring the mutagenicity and antimutagenic activity

(i) Method: See Example I.

(ii) Microorganism: See Example I.

(iii) Preparation of samples

a) Instant coffe: Instant coffee powder was dissolved in distilled water. Predetermined amounts of L-cystein and reduced glutathione (hereunder referred to as compounds of group B) were dissolved in distilled water together with a given amount of vitamin C. Each solution was mixed with the aqueous coffee solution to make 100 μl. Control solutions were prepared using thiamine and vitamin E in combination with the instant coffee solution.

b) Tobacco: Cigarettes were smoked on a smoking machine (product of Chuo Sansho K.K.) and the collected smoke (particulate phase) was dissolved in dimethyl sulfoxide (DMSO). Predetermined amounts of compounds of group B were dissolved in distilled water together with a given amount of vitamin C. Each solution was mixed with the DMSO solution of tobacco smoke to make 100 μl.

c) Bourbon whiskey: Bourbon whiskey was evaporated (≤40°C) to dryness under vacuum in a rotary evaporator. The resulting solid product was dissolved in DMSO. Predetermined amounts of compounds of group B were dissolved in distilled water together with a given amount of vitamin C. Each solution was mixed with the DMSO solution of the alcoholic concentrate to make 100 µl.

d) Black tea; Black tea leaves (2.5 g) were brewed with 100 ml of boiling water. The extract was freeze-dried and the resulting solid matter was dissolved in distilled water to form a solution of a predetermined concentration. Selected amounts of compounds of group B were dissolved in distilled water together with a given amount of vitamin C. Each solution was mixed with the aqueous solution of tea concentrate to make 100 µl.

(iv) Measurement of mutagenicity

The procedure of Example I was repeated.

2) Results

(i) Inactivation of the mutagenicity caused by mixing vitamin C with coffee

Table 10 shows that the mutagenicity of the combination of vitamin C and coffee is about 10 times as great as that of coffee alone. Table 10 also shows the antimutagenic activity of the compounds of group B, as well as thiamine and vitamin E. The figures in parentheses indicate the relative mutagenicity of samples containing test compounds, with the mutagenicity of the mixture of coffee and vitamin C taken as 100%.

Table 10

*S. typhimurium* TA100

| Sample | No. of revertants /plate (%) |
|---|---|
| coffee* | 35 ( 9) |
| coffee + vitamin C** | 372 (100) |
| coffee + vitamin C + L-cysteine*** | 120 ( 32) |
| coffee + vitamin C + reduced glutathione*** | 115 ( 31) |
| coffee + vitamin C + thiamine*** | 329 ( 88) |
| coffee + vitamin C + vitamin E*** | 314 ( 84) |

* 3 mg/plate

** 3 μM/plate

*** 12 μM/plate

Neither vitamin C nor compounds of group B had mutagenicity when they were present alone.

According to Table 10, L-cysteine and reduced glutathione had antimutagenic effects. The effectiveness of thiamine and vitamin E was almost negligible. The activity of the compounds of group B is not directed to the mutagenicity of coffee per se (nor to the mutagenicity of straight bourbon whiskey, black tea or tobacco alone as shown below), but is specific to the mutagenicity that appears when coffee is combined with vitamin C. Furthermore, as in the case of the compounds of group A and lipoic acid, the compounds of group B do not act on the process of mutagen formation, but on the mutagen or radical (active oxygen) per that is generated by the reaction between coffee and vitamin C.

(ii) Inactivation of mutagenicity due to mixing vitamin C with straight bourbon whiskey

As shown in Table 11 below, the mutagenicity of straight bourbon whiskey was increased by at least 5 folds upon addition of vitamin C. L-cysteine and reduced glutathione exhibited a remarkably high antimutagenic activity. The activity of thiamine was weak and vitamin E had no antimutagenic activity.

Table 11

*S. typhimurium* TA100

| Sample | No. of revertants /plate (%) |
|---|---|
| bourbon whiskey* | 108 ( 18) |
| bourbon whiskey + vitamin C** | 596 (100) |
| bourbon whiskey + vitamin C + L-cysteine*** | 107 ( 18) |
| bourbon whiskey + vitamin C + reduced glutathione*** | 129 ( 22) |
| bourbon whiskey + vitamin C + thiamine*** | 504 ( 85) |
| bourbon whiskey + vitamin C + vitamin E*** | 660 (110) |

*   0.5 ml equivalent/plate

**  3 μM/plate

*** 12 μM/plate

(iii) Inactivation of mutagenicity due to mixing vitmin C with cigarette smoke condensate (CSC)

The particulate phase of tobacco smoke was collected on a glass fiber filter and dissolved in DMSO to form CSC samples. The mutagenicity due to the reaction between vitamin C and CSC could be eliminated by L-cysteine and reduced glutathione. Thiamine and vitamin E were not effective at all. These results are shown in Table 12 below.

Table 12

S. typhimurium TA100

| Sample | No. of revertants /plate (%) |
|---|---|
| tobacco* | 14 ( 16) |
| tobacco + vitamin C** | 87 (100) |
| tobacco + vitamin C + L-cysteine*** | 12 ( 14) |
| tobacco + vitamin C + reduced glutathione*** | 12 ( 14) |
| tobacco + vitamin C + thiamine*** | 80 ( 92) |
| tobacco + vitamin C + vitamin E*** | 90 (103) |

*   0.25 mg/plate

**  3 μM/plate

*** 12 μM/plate

(iv) Inactivation of mutagenicity due to mixing vitamin C with black tea

The mutagenicity of black tea was also increased by addition of vitamin C (see Table 13 below). This effect of vitamin C was completely inactivated by L-cysteine and reduced glutathione. However, neither thiamine nor vitamin E had such effectiveness.

Table 13

S. typhimurium TA100

| Sample | No. of revertants /plate (%) |
|---|---|
| black tea* | 21 ( 15) |
| black tea + vitamin C** | 139 (100) |
| black tea + vitamin C + L-cysteine*** | 0 ( 0) |
| black tea + vitamin C + reduced glutathione*** | 0 ( 0) |
| black tea + vitamin C + thiamine*** | 120 ( 86) |
| black tea + vitamin C + vitamin E*** | 145 (104) |

* 0.25 mg/plate

** 3 μM/plate

*** 12 μM/plate

The term "ml equivalent" in Tables 3, 5, 7, 9, 11 and 13 means an amount in terms of volume (ml) of bourbon whiskey prior to evaporation under vacuum or black tea prior lyophilization.

Claims:

1. An antimutagenic agent containing as the effective ingredient a compound selected from among a component of a vitamin B complex consisting of thiamine pyrophosphate, folic acid and nicotinic acid, lipoic acid, and a thiol compound of the formula RSH wherein R is

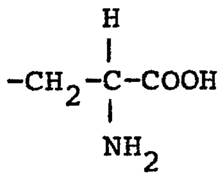 or 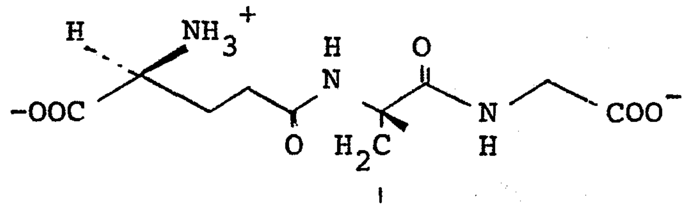

2. An antimutagenic agent according to Claim 1 wherein the effective ingredient is thiamine pyrophosphate, folic acid or nicotinic acid.

3. An antimutagenic agent according to Claim 2 wherein the effective ingredient is thiamine pyrophophate.

4. An antimutagenic agent according to Claim 2 wherein the effective ingredient is folic acid.

5. An antimutagenic agent according to Claim 2 wherein the effective ingredient is nicotinic acid.

6. An antimutagenic agent according to Claim 1 wherein the effective ingredient is lipoic acid.

7. An antimutagenic agent according to Claim 1 wherein the effective ingredient is the thiol compound of the formula RSH.

8. An antimutagenic agent according to Claim 7 wherein R is

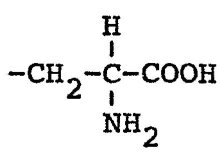

9. An antimutagenic agent according to Claim 7 wherein R is

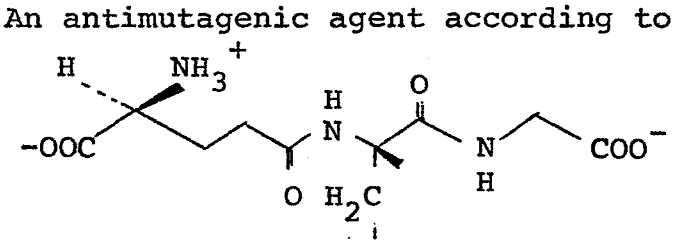

10. A vitamin C composition having no toxicity to human which comprises vitamin C and a compound selected from a component of a vitamin B complex consisting of thiamine pyrophosphate, folic acid and nicotinic acid, lipoic acid,

and a thiol compound of the formula RSH (wherein R is

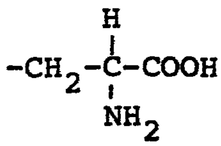

or

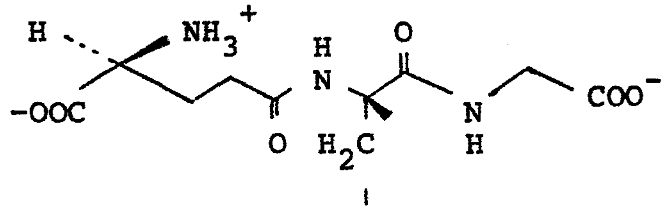

11. A method of reducing or completely inactivating the mutagenicity enhanced by the presence of vitamin C, which comprising ingesting vitamin C in combination with a compound selected from a component of a vitamin B complex consisting of thiamine pyrophosphate, folic acid and nicotinic acid, lipoic acid, and a thiol compound of the formula RSH (wherein R is

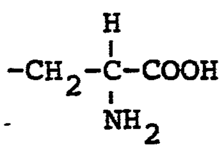

or

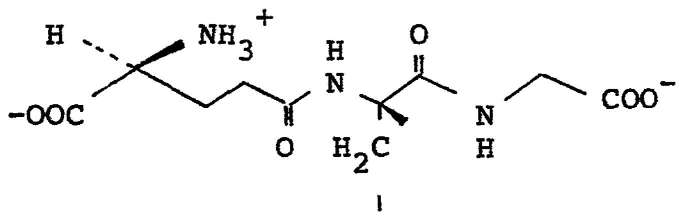

).